# EUROPEAN PATENT APPLICATION

(11) **EP 4 667 543 A1**
(43) Date of publication of application: **24.12.2025**
(21) Application number: 23939229.3
(22) Date of filing: 12.10.2023
(51) Int. Cl.: C09D 161/06, C09D 7/65, C09D 133/00, C08J 9/36, C08L 23/06, H01M 50/449, H01M 50/414, H01M 50/491

(54) **COATING COMPOSITION FOR SEPARATOR MEMBRANE, COMPOSITE SEPARATOR MEMBRANE, BATTERY CELL, BATTERY, AND ELECTRICAL APPLIANCE**

(30) Priority: 29.05.2023 CN 202310610594
(71) Applicant: Contemporary Amperex Technology Co., Limited, Ningde, Fujian 352100 (CN)
(72) Inventor: LI, Lei, Ningde, Fujian 352100 (CN); ZHENG, Yi, Ningde, Fujian 352100 (CN); KANG, Haiyang, Ningde, Fujian 352100 (CN); SUN, Chengdong, Ningde, Fujian 352100 (CN); CHEN, Meihuang, Ningde, Fujian 352100 (CN); LAI, Runhao, Ningde, Fujian 352100 (CN)
(74) Representative: Gong, Jinping
(86) International application number: PCT/CN2023/124153
(87) International publication number: WO 2024/244256

(57) **Abstract**

A coating composition for a separator membrane, a composite separator membrane, a battery cell, a battery, and an electrical appliance, the coating composition for a separator membrane comprising: porous phenolic resin microspheres and a binder, the mass ratio of the binder to the porous phenolic resin microspheres being between 1:1 to 1:20. By using the described coating composition, a coating may be prepared on the surface of a base membrane to obtain a composite separator membrane, which may effectively reduce the thermal shrinkage rate of the base membrane and improve the safety of a battery cell. In addition, since no significant impact is made on the gas permeability of the base membrane, the composite separator membrane obtained thereby exhibits excellent ionic conductivity. Therefore, the battery cell may have a high capacity retention rate while ensuring good safety performance.

## Description

### Cross-Reference to Related Application

The present application claims priority to Chinese Patent Application No. 202310610594.7 filed on 29 May 2023 and titled "COATING COMPOSITION FOR SEPARATOR, COMPOSITE SEPARATOR, BATTERY CELL, BATTERY, AND ELECTRICAL DEVICE," the entire content of which is incorporated herein by reference.

### Technical Field

The present application relates to the technical field of lithium batteries, and particularly relates to a coating composition for a separator, a composite separator, a battery cell, a battery, and an electrical device.

### Background

Battery cells are widely used because of having the advantages, such as reliable working performance, non-pollution, and memoryless effect. For example, as increasing importance is attached to environmental protection issues, new energy vehicles are increasingly popularized, and the demand for power battery cells will show an explosive growth.

As the application range of batteries becomes more and more extensive, increasingly higher requirements for safety of the batteries are presented. However, separators in the battery cells have poor heat resistance, so that the safety is worsened, and heat resistance of the separators needs to be improved.

### Summary of the Invention

The present application provides a coating composition for a separator, a composite separator, a battery cell, a battery, and an electrical device, which can improve the heat resistance of the separator.

In a first aspect, the present application provides a coating composition for a separator, comprising: porous phenolic resin microspheres and a binder, wherein a mass ratio of the binder to the porous phenolic resin microspheres is 1:1 to 1:20.

According to the present application, a coating layer can be prepared on a surface of a base film using the coating composition to obtain a composite separator, wherein the porous phenolic resin microspheres are mainly used as the skeleton of the coating layer, have good heat resistance, and can effectively reduce thermal shrinkage rate of the base film, so that they can be used in a battery to prevent short circuit caused by the contact between positive and negative electrodes due to the shrinkage of the separator under high-temperature conditions, thereby improving the safety of a battery cell. In addition, compared to an ordinary coating layer, their particular porous structure has no significant impact on the gas permeability of the base film, and the composite separator thus obtained has good ionic conductivity, so that the battery cell not only has good safety, but also has a high capacity retention rate.

In some embodiments, the binder comprises at least one of polyacrylic acid, polyacrylate, polyvinylidene fluoride, styrene butadiene rubber, or sodium carboxymethylcellulose. The above binder can be used to stably bind the porous phenolic resin microspheres to the surface of the base film, thereby improving the stability of the composite separator, and further improving its heat resistance.

In some embodiments, the porous phenolic resin microspheres satisfy at least one of conditions below: 1) Dv50 particle size of the porous phenolic resin microspheres is 0.1 µm to 5 µm; 2) average pore size of the porous phenolic resin microspheres is 10 nm to 50 nm; 3) specific surface area of the porous phenolic resin microspheres is 15 m²/g to 280 m²/g; and 4) total pore volume of the porous phenolic resin microspheres is 0.700 cm³/g to 1.680 cm³/g. In this case, the resulting composite separator has better heat resistance or gas permeability, which is more conducive to improving the safety and the capacity retention rate of the battery cell using the composite separator.

In some embodiments, the porous phenolic resin microspheres satisfy at least one of conditions below: 1) the Dv50 particle size of the porous phenolic resin microspheres is 0.12 µm to 2 µm; 2) the average pore size of the porous phenolic resin microspheres is 15 nm to 40 nm; 3) the specific surface area of the porous phenolic resin microspheres is 60 m²/g to 265 m²/g; and 4) the total pore volume of the porous phenolic resin microspheres is 0.910 cm³/g to 1.560 cm³/g. In this case, the resulting composite separator has better heat resistance or gas permeability, which is more conducive to improving the safety and the capacity retention rate of the battery cell using the composite separator.

In some embodiments, the porous phenolic resin microspheres are obtained through a reaction between a phenolic compound and an aldehyde compound in a solvent in the presence of a catalytic amount of a phenolic aldehyde polycondensation reaction catalyst and a pore-forming amount of a pore-forming agent. Different phenolic compounds and aldehyde compounds can be selected to obtain different types of porous phenolic resin microspheres. In addition, the reaction conditions can be further controlled to obtain porous phenolic resin microspheres with different particle sizes, pore sizes, specific surface areas, or total pore volumes, which has a high degree of designability, thus obtaining appropriate porous phenolic resin microspheres based on actual requirements.

In some embodiments, a molar ratio of phenolic hydroxyl in the phenolic compound to aldehyde radical in the aldehyde compound is 1:1.1 to 1:1.6. The porous phenolic resin microspheres obtained in this case have better dispersity, which is conductive to obtaining porous phenolic resin microspheres with stable properties, and ensures that the coating layer formed by the coating composition has more stable performance.

In some embodiments, the phenolic compound comprises at least one of phenol, hydroquinone, resorcinol, catechol, cresol, or anacardol; the aldehyde compound comprises formaldehyde and/or paraformaldehyde; the phenolic aldehyde polycondensation reaction catalyst is an alkaline substance, comprising at least one of sodium hydroxide, ammonia water, triethylamine, barium hydroxide, or aniline; and the pore-forming agent comprises at least one of toluene, ethylene glycol, diethyl phthalate, dioctyl phthalate, or octadecanol. Raw materials for preparing the porous phenolic resin microspheres are cheap and easily available with many types, may be selected based on actual requirements, and are adapted to industrial production.

In a second aspect, the present application provides a composite separator, comprising: a base film, and a coating layer arranged on at least one surface of the base film and formed by the coating composition according to any one embodiment in the first aspect.

According to the present application, the composite separator comprises the coating layer formed by the coating composition according to any one embodiment in the first aspect, so that it is understandable that the composite separator has the beneficial effects of the first aspect.

In some embodiments, surface density of the coating layer is 0.1 g/cm² to 5 g/cm². The composite separator obtained in this case has better heat resistance and better gas permeability, so that the battery cell can have better safety and capacity retention rate.

In some embodiments, the composite separator satisfies: 1.25≤D/d≤62.5, wherein D is Dv50 particle size of the porous phenolic resin microspheres, and d is average pore size of the base film. In this case, thickness of the coating layer can be reduced while ensuring the heat resistance and the gas permeability of the composite separator, thereby improving the energy density of the battery cell.

In some embodiments, the composite separator satisfies: 1.5≤D/d≤25. In this case, thickness of the coating layer can be further reduced while ensuring the heat resistance and the gas permeability of the composite separator, thereby further improving the energy density of the battery cell.

In a third aspect, the present application provides a battery cell, comprising the composite separator according to any one embodiment in the second aspect.

According to the present application, the battery cell comprises the composite separator according to any one embodiment in the second aspect, so that it is understandable that the battery cell has the beneficial effects of the second aspect.

In a fourth aspect, the present application provides a battery, comprising the battery cell according to any one embodiment in the third aspect.

In a fifth aspect, the present application provides an electrical apparatus, comprising at least one of the battery cell according to any one embodiment in the third aspect or the battery according to any one embodiment in the fourth aspect.

The present application provides a coating composition, with which a coating layer can be prepared on a surface of a base film to obtain a composite separator. The composite separator has good heat resistance and good gas permeability, thereby obtaining a battery cell with good safety and a high capacity retention rate.

### Description of Drawings

FIG. 1 is a scanning electron microscope image of surface appearance of porous phenolic resin microspheres in an embodiment of the present application.
FIG. 2 is a scanning electron microscope image of mechanical section appearance of porous phenolic resin microspheres in an embodiment of the present application.
FIG. 3 is a schematic diagram of a battery cell in an embodiment of the present application.
FIG. 4 is an exploded view of the battery cell in an embodiment of the present application as shown in FIG. 3.
FIG. 5 is a schematic diagram of a battery module in an embodiment of the present application.
FIG. 6 is a schematic diagram of a battery in an embodiment of the present application.
FIG. 7 is an exploded view of the battery in an embodiment of the present application shown in FIG. 6.
FIG. 8 is a schematic diagram of an electrical apparatus in which a battery cell is used as a power source in an embodiment of the present application.

### Reference numerals in the figures:

1 battery; 2 upper box; 3 lower box; 4 battery module; 5 battery cell; 51 case; 52 electrode assembly; 53 top cover assembly

### Detailed Description

Embodiments of a coating composition for a separator, a battery cell, a battery, and an electrical device of the present application are specifically disclosed below with reference to the detailed description of drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order. For example, the method may comprise steps (a), (b) and (c), or may further comprise steps (a), (c) and (b), or may further comprise steps (c), (a) and (b), and the like.

Unless otherwise specifically stated, the terms "comprising" and "including" mentioned in the present application may be open-ended, or may be closed-ended. For example, the "comprising" and "including" may indicate that it is also possible to comprise or comprise other components not listed, and it is also possible to comprise or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In order to conveniently describe the beneficial effects of the embodiments of the present application, in the context of the specification of the present application, unless otherwise specified, the composite separator refers to a coating layer formed by the coating composition in the embodiments of the present application on a base film.

As described in the above Background, the application range of batteries becomes more and more extensive, but increasingly higher requirements for safety of the batteries are presented. A battery cell generally comprises a positive electrode plate, a negative electrode plate, and a separator, wherein the separator is located between the positive electrode plate and the negative electrode plate, to function for conducting ions and isolating electrons.

However, a current separator generally uses a polyolefin film, such as a polyethylene film or a polypropylene film, but has a problem that the polyolefin film has poor heat resistance, and the polyethylene film and the polypropylene separator will shrink severely when being heated at temperatures of 130°C and 150°C, respectively, thereby possibly causing direct contact between the positive and negative electrodes, resulting in short circuit, even severely resulting in thermal runaway, and posing a safety hazard.

In view of the above problems, a ceramic coating layer is often prepared on the polyolefin film in the related art to reduce the thermal shrinkage rate of the separator, thereby preventing the short circuit caused by direct contact between the positive and negative electrodes, and improving the safety of the battery cell. However, the problem is that the separator further has the function of ion conduction in the battery cell. A heat-resistant coating layer prepared on the polyolefin film can reduce the thermal shrinkage rate of the separator to a certain extent, but will also significantly affect the gas permeability of the polyolefin film, that is, will reduce ion channels on the separator, worsen the ion transport performance, then increase the polarization of the battery cell, reduce the electrical performance of the battery, and reduce the capacity retention rate. In addition, the current heat-resistant coating layer mainly uses a conventional ceramic material, such as boehmite, aluminum oxide, or silicon dioxide, and will further reduce the energy density of the battery cell due to high density thereof.

In view of the above technical problems, an embodiment of the present application presents a coating composition for a separator from the perspective of improving the coating performance. The coating composition can be used to prepare a heat-resistant coating on a base film. The coating composition contains porous phenolic resin microspheres, which have good heat resistance and can reduce the thermal shrinkage rate of the separator. In addition, their porous structure will not significantly affect the gas permeability value of the separator, that is, will not affect the ion transport performance of the separator, thereby further having a high capacity retention rate while improving the battery safety. In addition, it is worth noting that the porous phenolic resin microspheres have lower density than the ceramic material in the related art, and thus will not significantly affect the energy density of the battery cell.

### Coating composition for a separator

In a first aspect, an embodiment of the present application presents a coating composition for a separator, comprising: porous phenolic resin microspheres and a binder, wherein a mass ratio of the binder to the porous phenolic resin microspheres is 1:1 to 1:20.

According to the present application, the coating composition comprises the porous phenolic resin microspheres and the binder. After a coating layer is formed by the coating composition on a base film to obtain a composite separator, the porous phenolic resin microspheres serve as the skeleton of the coating layer. Phenolic resin is a main category of synthetic resins prepared through an addition reaction and a polycondensation reaction between a phenolic compound and an aldehyde compound. Like ordinary polymer compounds, the phenolic resin has basic properties of the polymer compounds, such as large molecular weight, diverse molecular structure, curing properties, and pyrolysis and carbonization properties. In addition, because the phenolic resin has a cross-linked network structure and contains a large amount of rigid benzene ring, the porous phenolic resin microspheres have excellent heat resistance, ablation resistance, flame retardancy, and strength, and can still maintain the structural integrity and dimensional stability thereof even at a very high temperature. When the composite separator is heated, the base film shrinks, driving the porous phenolic resin microspheres to quickly contact with and extrude each other. Since the porous phenolic resin microspheres have high heat resistance and strength, they can hardly deform during the extrusion, thereby exerting an acting force opposite to the shrinkage direction on the base film, significantly reducing the thermal shrinkage rate of the base film, and improving heat resistance thereof. Therefore, in the battery cell using the composite separator, the composite separator has good deformation resistance at a high temperature, thereby reducing the probability of occurrence of short circuit caused by direct contact between the positive electrode plate and the negative electrode plate in the battery cell, and significantly improving the thermal safety performance of the battery cell.

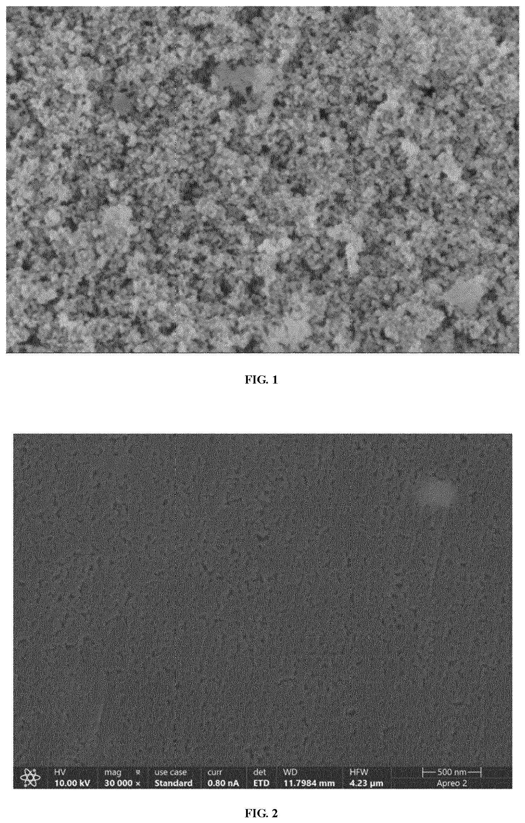

In addition, FIG. 1 shows a scanning electron microscope image of surface appearance of porous phenolic resin microspheres obtained in an embodiment of the present application, and FIG. 2 shows a scanning electron microscope image of mechanical section appearance of porous phenolic resin microspheres obtained in an embodiment of the present application, from which it can be seen that the porous phenolic resin microspheres have a through porous structure, so that the preparation of the above coating layer on the base film does not significantly affect the gas permeability thereof. It is understandable that the separator in the battery cell further functions to provide an ion transport channel. The better the gas permeability of the separator is, the more channels it provides for ion conduction, that is, the better the ion transport performance is. Generally, a coating layer prepared on a base film may block some pores on the base film, thereby worsening the ion transport performance. However, in an embodiment of the present application, due to the porous structure of the porous phenolic resin microspheres, even if they block original pores on the separator, ions still can pass through the pores in the microspheres. Therefore, the composite separator obtained from the above coating composition will not have significantly reduced gas permeability compared to the base film.

Moreover, in the porous structure of the porous phenolic resin microspheres, smaller pore size can adsorb the electrolyte solution through capillary action, so that porous channels of the porous phenolic resin microspheres are filled with the electrolyte solution, thereby increasing the contact area between the separator and the electrolyte solution, contributing to improving the impregnation effect and liquid retention effect of the electrolyte solution on the separator, providing sufficient ion channels, and significantly improving the ion transport performance of the composite separator compared with conventional heat-resistant coating layers in the prior art. Therefore, the battery cell using the composite separator has less polarization during charge-discharge, thus having a high capacity retention rate.

In addition, it is worth mentioning that the porous phenolic resin microspheres have lower density than ordinary phenolic resin microspheres due to the porous structure thereof, thereby reducing the weight of the composite separator, and improving the energy density of the battery cell.

The binder in the coating composition is mainly used for stable bonding between the porous phenolic resin microspheres and the base film and between the porous phenolic resin microspheres. It is understandable that according to the above description that the porous phenolic resin microspheres reduce the thermal shrinkage rate of the base film, that is, the porous phenolic resin microspheres exert an acting force opposite to the shrinkage direction on the base film. Therefore, the stable bonding between the porous phenolic resin microspheres and the base film has very great influence on functioning of the porous phenolic resin microspheres. If no binder is added, it is difficult to reduce the thermal shrinkage rate of the base film only by the frictional force between the microspheres and the base film. By adding a binder, the microspheres are bonded to the base film by the binder, and its bonding force is much higher than the frictional force between the microspheres and the base film, so that the coating layer can better reduce the thermal shrinkage rate of the base film. In addition, the strong bonding force can further ensure that the coating layer on the surface of the composite separator can hardly fall off, and has better stability, thereby improving the safety of the battery cell.

In an embodiment of the present application, a mass ratio of the binder to the porous phenolic resin microspheres is further limited to 1:1 to 1:20. It is understandable that if the content of the binder is too high, since an ordinary binder has worse heat resistance and strength than the phenolic resin, an acting force opposite to the shrinkage direction exerted by the coating layer on the base film will be reduced, thereby failing to effectively reduce the thermal shrinkage rate of the base film. In addition, too high content of the binder will increase the coating difficulty and increase the production costs. If the content of the binder is too low, the binder fails to effectively play the role of the binder mentioned above, that is, there is poor adhesion between the microspheres and the base film, an acting force opposite to the shrinkage direction exerted by the coating layer on the base film is reduced, the coating layer is unstable, and powder tends to fall off, thereby affecting the heat resistance and stability of the composite separator. Therefore, it is necessary to control the mass ratio of the binder to the porous phenolic resin microspheres in the range of 1:1 to 1:20. For example, the mass ratio of the binder to the porous phenolic resin microspheres may be 1:1, 1:2, 1:3, 1:4, 1:5, 1:6, 1:7, 1:8, 1:9, 1:10, 1:11, 1:12, 1:13, 1:14, 1:15, 1:16, 1:17, 1:18, 1:19, or 1:20, or within a range consisting of any of the above values. Preferably, the mass ratio of the binder to the porous phenolic resin microspheres is 1:8 to 1:15.

In some embodiments, the binder comprises at least one of polyacrylic acid, polyacrylate, polyvinylidene fluoride, styrene butadiene rubber, or sodium carboxymethylcellulose.

In the above embodiments, several specific binders are listed, one or more of which can be selected by those skilled in the art based on implementation requirements. The above binders have good bonding effect, which can stably bind the porous phenolic resin microspheres to the surface of the base film, thereby improving the stability of the composite separator. In addition, the above binders have good heat resistance, and still have very strong adhesion at a high temperature, thereby further improving the heat resistance of the composite separator.

It should be noted that the binder includes, but is not limited to, the substances listed above, and those skilled in the art can select any binder known in the prior art based on actual requirements.

In some embodiments, the porous phenolic resin microspheres satisfy at least one of conditions below: 1) Dv50 particle size of the porous phenolic resin microspheres is 0.1 µm to 5 µm; 2) average pore size of the porous phenolic resin microspheres is 10 nm to 50 nm; 3) specific surface area of the porous phenolic resin microspheres is 15 m²/g to 280 m²/g; and 4) total pore volume of the porous phenolic resin microspheres is 0.700 cm³/g to 1.680 cm³/g. In this case, the resulting composite separator has better heat resistance or gas permeability, which is more conducive to improving the safety and the capacity retention rate of the battery cell using the composite separator.

In the above embodiments, the parameters related to the porous phenolic resin microspheres are further limited, so that the resulting composite separator can have better heat resistance or gas permeability, which is more conducive to improving the safety and the capacity retention rate of the battery cell using the composite separator.
1) The Dv50 particle size of the porous phenolic resin microspheres may be 0.1 µm to 5 µm. It is understandable that, in general, the smaller the particle size of the porous phenolic resin microspheres is, the more the microspheres on the base film per unit area are, and therefore the larger the acting force opposite to the shrinkage direction exerted by the microspheres on the base film are, the better the heat resistance of the resulting composite separator is. In addition, when the particle size is small, the coating layer is lighter and thinner on the premise of ensuring the heat resistance of the composite separator, which is conductive to improving the energy density of the battery cell. Therefore, the Dv50 particle size of the porous phenolic resin microspheres can generally be minimized to obtain a composite separator with better heat resistance. However, if the Dv50 particle size of the porous phenolic resin microspheres is too small, the influence on the gas permeability of the composite separator will increase. It is understandable that the smaller the particle size is, the higher the stacking density of the coating layer is, the smaller the porosity of the coating layer is, and even some of the porous phenolic resin microspheres will enter the pores of the base film, thereby resulting in pore blockage. Although its porous structure can still provide a channel for ion conduction, it will still reduce the gas permeability value of the base film to a certain extent. In addition, the porous phenolic resin microspheres located inside the pores of the base film cannot effectively exert an acting force opposite to the shrinkage direction on the base film, but will, on the contrary, reduce the heat resistance of the composite separator.

In summary, due to the good heat resistance and porous structure of the porous phenolic resin microspheres in the embodiment of the present application, compared with the ceramic material used in the heat-resistant coating layer in the prior art, the Dv50 particle size of the porous phenolic resin microspheres may be smaller, thereby improving the energy density of the battery cell while ensuring the heat resistance and the gas permeability of the composite separator. Therefore, the Dv50 particle size of the porous phenolic resin microspheres can be controlled within 0.1 µm to 5 µm, for example, the Dv50 particle size of the porous phenolic resin microspheres may be 0.1 µm, 0.2 µm, 0.3 µm, 0.4 µm, 0.5 µm, 0.6 µm, 0.7 µm, 0.8 µm, 0.9 µm, 1.0 µm, 1.5 µm, 2.0 µm, 2.5 µm, 3.0 µm, 3.5 µm, 4.0 µm, 4.5 µm, or 5.0 µm, or within a range consisting of any of the above values. Further optionally, the Dv50 particle size of the porous phenolic resin microspheres is 0.12 µm to 2 µm.

It should be noted that the Dv50 particle size of the porous phenolic resin microspheres in the present application has a well-known meaning in the art. The Dv50 particle size means that 50% of particle sizes in the volume-based particle size distribution are smaller than the value. The Dv50 can be measured by a method and an instrument known in the art, for example, may be measured using a laser particle size analyzer, such as Mastersizer 2000E of Malvern Instruments Ltd, with reference to GB/T 19077-2016 Particle size analysis-laser diffraction methods.

2) In the above embodiments, the average pore size of the porous phenolic resin microspheres is further limited. In general, the smaller the average pore size of the porous phenolic resin microspheres is, the more obvious their capillary effect is, and the better the impregnability and liquid-retaining capacity of the composite separator on the electrolytic salt are, the more conducive they are to improving the ion transport performance of the composite separator; and on the premise that the total pore volume is constant, the smaller the average pore size is, the better the heat resistance and rigidity of the porous phenolic resin microspheres are, which is conducive to improving the heat resistance of the composite separator. However, too small average pore size is not conducive to increasing the total pore volume of the porous phenolic resin microspheres, and will further increase the production costs of the porous phenolic resin microspheres. Therefore, the average pore size of the porous phenolic resin microspheres can be controlled to 10 nm to 50 nm. In this case, the resulting composite separator has good heat resistance and ion transport performance, and can improve the safety and the capacity retention rate of the battery cell. For example, the average pore size of the porous phenolic resin microspheres may be 10 nm, 12 nm, 14 nm, 16 nm, 20 nm, 22 nm, 24 nm, 26 nm, 28 nm, 30 nm, 32 nm, 34 nm, 36 nm, 38 nm, 40 nm, 42 nm, 44 nm, 46 nm, 48 nm, or 50 nm, or within a range consisting of any of the above values. Further optionally, the average pore size of the porous phenolic resin microspheres may be controlled to 15 nm to 40 nm.

It should be noted that the average pore size of the porous phenolic resin microspheres in the present application may be measured with reference to GB/T 21650.2-2008 Pore size distribution and porosity of solid materials by mercury porosimetry and gas adsorption-Part 2: Analysis of mesopores and macropores by gas adsorption.

3) In the above embodiments, the specific surface area of the porous phenolic resin microspheres is further limited. It is understandable that the specific surface area of the porous phenolic resin microspheres is associated with their particle size, pore size, and total pore volume. In general, when other conditions are constant, the smaller the particle size is, the smaller the pore size is, the larger the total pore volume is, the larger the specific surface area of the porous phenolic resin microspheres is. The inventors have discovered through a lot of experiments that when the specific surface area of the porous phenolic resin microspheres is within a range of 15 m²/g to 280 m²/g, the resulting composite separator has good heat resistance and ion transport performance, and the battery cell has better safety and a higher capacity retention rate. For example, the specific surface area of the porous phenolic resin microspheres may be 15 m²/g, 30 m²/g, 45 m²/g, 60 m²/g, 80 m²/g, 100 m²/g, 110 m²/g, 120 m²/g, 130 m²/g, 140 m²/g, 150 m²/g, 160 m²/g, 170 m²/g, 180 m²/g, 190 m²/g, 200 m²/g, 210 m²/g, 220 m²/g, 230 m²/g, 240 m²/g, 250 m²/g, 260 m²/g, 270 m²/g, or 280 m²/g, or within a range consisting of any of the above values. Further optionally, the specific surface area of the porous phenolic resin microspheres may be controlled to 60 m²/g to 265 m²/g.

It should be noted that the specific surface area of the porous phenolic resin microspheres in the present application is measured by: using a specific surface area analyzer model TRISTAR II 3020, according to GB/T 19587-2004 Determination of the specific surface area of solids by gas adsorption using the BET method. 1. Pretreatment: an appropriate amount of sample is loaded in a special sample tube, heated, vacuum degassed for 2 h, cooled to room temperature, and then weighed to obtain the total mass, thus obtaining the sample mass by subtracting the mass of the sample tube from the total mass. 2. Test: The sample tube is loaded into a workstation, and an adsorption amount of a gas on the solid surface is measured at a constant low temperature under different adsorption pressures, to obtain a monolayer adsorption amount of the sample based on the BET multilayer adsorption theory and formulas thereof, thereby calculating the specific surface area of the solid sample per unit mass. 3. Adsorption gas: nitrogen at adsorption pressure points of 0.05/0.10/0.15/0.20/0.25/0.30 in a test atmosphere of high-purity liquid nitrogen.

4) In the above embodiments, the total pore volume of the porous phenolic resin microspheres is further limited. The larger the total pore volume of the porous phenolic resin microspheres is, that is, the higher their porosity is, the more the ion channels are in the resulting composite separator, so that the better the ion transport performance is, the higher the capacity retention rate of the battery cell is. However, when the total pore volume of the porous phenolic resin microspheres is too large, the heat resistance and strength of the porous phenolic resin microspheres will be reduced, which may thus reduce the heat resistance of the composite separator, and then reduce the safety of the battery cell. Therefore, the total pore volume of the porous phenolic resin microspheres may be controlled within a range of 0.700 cm³/g to 1.680 cm³/g. In this case, the composite separator can have both better heat resistance and better ion transport performance, and the battery cell has good safety and a high capacity retention rate. For example, the total pore volume of the porous phenolic resin microspheres may be 0.7 cm³/g, 0.75 cm³/g, 0.8 cm³/g, 0.85 cm³/g, 0.9 cm³/g, 0.95 cm³/g, 1.0 cm³/g, 1.05 cm³/g, 1.1 cm³/g, 1.15 cm³/g, 1.2 cm³/g, 1.25 cm³/g, 1.3 cm³/g, 1.35 cm³/g, 1.4 cm³/g, 1.45 cm³/g, 1.5 cm³/g, 1.55 cm³/g, 1.6 cm³/g, or 1.68 cm³/g, or within a range consisting of any of the above values. Further optionally, the total pore volume of the porous phenolic resin microspheres may be controlled within a range of 0.91 cm³/g to 1.56 cm³/g.

It should be noted that the total pore volume of the porous phenolic resin microspheres in the present application is measured by: using a specific surface area analyzer model TRISTAR II 3020 with reference to GB/T 21650.2-2008, so that the total pore volume can be directly obtained from testing.

In some embodiments, the porous phenolic resin microspheres are obtained through a reaction between a phenolic compound and an aldehyde compound in a solvent in the presence of a catalytic amount of a phenolic aldehyde polycondensation reaction catalyst and a pore-forming amount of a pore-forming agent.

In the above embodiments, different phenolic compounds and aldehyde compounds may be selected to obtain different types of porous phenolic resin microspheres. In addition, the reaction conditions may be further controlled to obtain porous phenolic resin microspheres with different particle sizes, pore sizes, specific surface areas, or total pore volumes, which has a high degree of designability, thus obtaining appropriate porous phenolic resin microspheres based on actual requirements.

For example, different phenolic compounds and aldehyde compounds may be used to obtain porous phenolic resin microspheres with different heat resistance or strength; the reaction conditions, such as the ratio of the phenolic compounds to the aldehyde compounds or the stirring intensity during the reaction, may be controlled to obtain porous phenolic resin microspheres with different particle sizes; the addition amount, type, or reaction conditions of the pore-forming agent may be controlled to control the average pore size of the porous phenolic resin microspheres; and the specific surface area and the total pore volume of the porous phenolic resin microspheres may be further regulated.

It should be further noted that porous phenolic resin microspheres with different performance parameters may also be purchased directly through commercial channels.

In some embodiments, a molar ratio of phenolic hydroxyl in the phenolic compound to aldehyde radical in the aldehyde compound is 1:1.1 to 1:1.6.

In the above embodiments, the molar ratio of the phenolic hydroxyl in the phenolic compound to the aldehyde radical in the aldehyde compound may be controlled, and initial cross-linking polymerization reaction sites in the reaction system may be increased, which is more conductive to controlling particle size distribution of porous phenolic resin microspheres, enables the particle size to be relatively more centralized, that is, the porous phenolic resin microspheres obtained in this case have better dispersity, is conductive to obtaining porous phenolic resin microspheres with stable properties, and ensures that the coating layer formed by the coating composition has more stable performance. For example, the molar ratio of the phenolic hydroxyl in the phenolic compound to the aldehyde radical in the aldehyde compound may be 1:1.1, 1:1.15, 1:1.2, 1:1.25, 1:3, 1:1.35, 1:1.4, 1:1.45, 1:1.5, 1:1.55, or 1:1.6, or within a range consisting of any of the above values. Further optionally, the molar ratio of the phenolic hydroxyl in the phenolic compound to the aldehyde radical in the aldehyde compound may be 1:1.1 to 1:1.4.

In some embodiments, the phenolic compound comprises at least one of phenol, hydroquinone, resorcinol, catechol, cresol, or anacardol; the aldehyde compound comprises formaldehyde and/or paraformaldehyde; the phenolic aldehyde polycondensation reaction catalyst is an alkaline substance, comprising at least one of sodium hydroxide, ammonia water, triethylamine, barium hydroxide, or aniline; and the pore-forming agent comprises at least one of toluene, ethylene glycol, diethyl phthalate, dioctyl phthalate, or octadecanol.

In the above embodiments, raw materials for preparing the porous phenolic resin microspheres are specifically listed. The raw materials for preparing the porous phenolic resin microspheres are cheap and easily available with many types, may be selected based on actual requirements, and are adapted to industrial production.

It should be further noted that the phenolic compound, the aldehyde compound, the phenolic aldehyde polycondensation reaction catalyst, and the pore-forming agent mentioned above are not limited to those listed above. Those skilled in the art may select other types of a phenolic compound, an aldehyde compound, a phenolic aldehyde polycondensation reaction catalyst, and a pore-forming agent in the prior art based on actual requirements.

As some examples, the porous phenolic resin microspheres may be prepared by:
adding the phenolic compound, the aldehyde compound, the phenolic aldehyde polycondensation reaction catalyst, and the pore-forming agent to a solvent to obtain a reaction system, heating and stirring the reaction system for reaction for 3 h to 8 h, then regulating the reaction system to a pH of 2 to 6, and continuing heating for reaction for 0.5 h to 2 h, and cooling the reaction system while stirring to room temperature; and
filtering, washing, and drying the above reaction system to obtain the porous phenolic resin microspheres.

It is understandable that the above method is used as an example, and the porous phenolic resin microspheres may be prepared according to other known methods in the prior art.

As some examples, total percentage mass content of the phenolic compound and the aldehyde compound in the reaction system is 21% to 26%; percentage mass content of the phenolic aldehyde polycondensation reaction catalyst in the reaction system is 0.1% to 1%; percentage mass content of the pore-forming agent in the reaction system is 5% to 10%; and the balance is a solvent, which may be water.

As some examples, the heating temperature during heating and stirring is 70°C to 100°C.

In some embodiments, the coating composition further comprises a dispersant, which may comprise at least one of water, dimethylformamide (DMF), diethylformamide, dimethylacetamide (DMAc), N-methylpyrrolidone (NMP), methanol, ethanol, 1-propanol, 2-propanol (isopropanol), 1-butanol (n-butanol), 2-methyl-1-propanol (isobutanol), 2-butanol (sec-butanol), 1-methyl-2-propanol (tert-butanol), pentanol, hexanol, heptanol or octanol; or a glycol such as ethylene glycol, diethylene glycol, triethylene glycol, propylene glycol,1,3-propylene glycol, 1,3-butylene glycol, 1,5-pentylene glycol, hexylene glycol, glycerol, trimethylolpropane, pentaerythritol, sorbitol, ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, tetraethylene glycol monobutyl ether, acetone, methyl ethyl ketone, methyl propyl ketone, cyclopentanone, ethyl acetate, γ-butyrolactone, and ε-propiolactone.

In some embodiments, solid content of the coating composition may be 10%-50%.

In some embodiments, the coating composition may further comprise other additives, such as a defoaming agent, a wetting agent, an emulsifier, or an anti-settling agent, which may be selectively added by those skilled in the art as required.

### Method for preparing a coating composition for a separator

The present application further provides a method for preparing a coating composition for a separator, comprising the following steps: dispersing porous phenolic resin microspheres and a binder in a dispersant to obtain the coating composition for a separator.

Specific types and addition amounts of the porous phenolic resin microspheres, the binder, and the dispersant may be selected according to any one embodiment in the first aspect.

### Composite separator

In a second aspect, the present application provides a composite separator, comprising: a base film, and a coating layer arranged on at least one surface of the base film and formed by the coating composition according to any one embodiment in the first aspect.

According to the present application, the composite separator comprises the coating layer formed by the coating composition according to any one embodiment in the first aspect, so that it is understandable that the composite separator has the beneficial effects of the first aspect.

In any one embodiment of the present application, types of the base film are not limited, and a separator known in the prior art may be selected as the base film based on actual requirements. For example, a single-layer polyolefin separator or a multi-layer polyolefin separator may be used as the base film, the single-layer polyolefin separator may comprise at least one of a polyethylene separator or a polypropylene separator, and the multi-layer polyolefin separator may comprise at least one of a polypropylene-polyethylene-polypropylene separator or a polypropylene-polyethylene separator.

In some embodiments, surface density of the coating layer is 0.1 g/cm² to 5 g/cm².

In the above embodiments, since the porous phenolic resin microspheres in the coating layer have good heat resistance, strength, and low density, compared with an ordinary ceramic coating layer, the above coating layer can still enable the composite separator to have good heat resistance at a low surface density. In addition, a small surface density can enable the composite separator to have better gas permeability, thereby enabling the battery cell to have a higher capacity retention rate while having good safety, and effectively improving the energy density of the battery cell. However, if the surface density of the coating layer is too low, the heat resistance of the composite separator cannot be ensured. Therefore, the surface density of the coating layer may be controlled within a range of 0.1 g/m² to 5 g/m², for example, the surface density of the coating layer may be 0.1 g/m², 0.2 g/m², 0.3 g/m², 0.4 g/m², 0.5 g/m², 0.6 g/m², 0.7 g/m², 0.8 g/m², 0.9 g/m², 1 g/m², 1.2 g/m², 1.4 g/m², 1.6 g/m², 1.8 g/m², 2 g/m², 2.2 g/m², 2.4 g/m², 2.6 g/m², 2.8 g/m², 3 g/m², 3.5 g/m², 4 g/m², 4.5 g/m², or 5 g/m², or within a range consisting of any of the above values. Further optionally, the surface density of the coating layer may be 1 g/cm² to 4 g/cm².

In some embodiments, the composite separator satisfies: 1.25≤D/d≤62.5, wherein D is Dv50 particle size of the porous phenolic resin microspheres, and d is average pore size of the base film.

In the above embodiments, the relationship between the Dv50 particle size of the porous phenolic resin microspheres and the average pore size of the base film is specifically defined. The inventors have discovered through a lot of experiments that the composite separator obtained in this case has good heat resistance and good gas permeability. Compared with the ordinary existing ceramic coating layer, the value of D/d may be smaller, indicating that the porous phenolic resin microspheres, due to their good heat resistance and porous structure, can still satisfy the requirements for heat resistance and gas permeability of the composite separator under the condition that there are small porous phenolic resin microspheres in the coating layer. Therefore, a light and thin coating process may be used to reduce the overall weight and thickness of the composite separator, thereby improving the energy density of the battery cell. The value of D/d may be 1.25, 1.5, 2, 2.5, 3, 3.5, 4, 5, 6, 7, 8, 9, 10, 11, 12, 13, 14, 15, 16, 17, 18, 19, 20, 22, 24, 26, 28, 30, 35, 40, 45, 50, 55, 60, or 62.5, or within a range consisting of any of the above values. Further preferably, the composite separator satisfies: 1.5≤D/d≤25.

### Battery cell

In a third aspect, the present application provides a battery cell, comprising the composite separator according to any one embodiment in the second aspect.

According to the present application, the battery cell comprises the composite separator according to any one embodiment in the second aspect, so that it is understandable that the battery cell has the beneficial effects of the second aspect.

In general, the battery cell further comprises a positive electrode plate, a negative electrode plate, and an electrolyte. During charge-discharge of the battery, active ions are intercalated and deintercalated back and forth between the positive electrode plate and the negative electrode plate. The electrolyte serves to conduct ions between the positive electrode plate and the negative electrode plate.

### [Positive electrode plate]

The positive electrode plate comprises a positive electrode current collector and a positive electrode film layer arranged on at least one surface of the positive electrode current collector, and the positive electrode film layer comprises the positive electrode active material in the first aspect of the present application.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may include, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

### [Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

### [Electrolyte]

The electrolyte serves to conduct ions between the positive electrode plate and the negative electrode plate. Types of the electrolyte are not specifically limited in the present application, and may be selected as required. For example, the electrolyte may be in a liquid state, a gel state, or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

In some embodiments, the positive electrode plate, the negative electrode plate, and the composite separator may be made into an electrode assembly by a winding process or a stacking process.

In some embodiments, the battery cell may comprise an outer package. The outer package may be used to encapsulate the electrode assembly and the electrolyte mentioned above.

In some embodiments, the outer package of the battery cell may be a hard shell, such as a hard plastic shell, an aluminum shell, and a steel shell. The outer package of the battery cell may also be a soft bag, such as a pouch-type soft bag. The material of the soft bag may be a plastic, and examples of the plastic may include polypropylene, polybutylene terephthalate, polybutylene succinate, and the like.

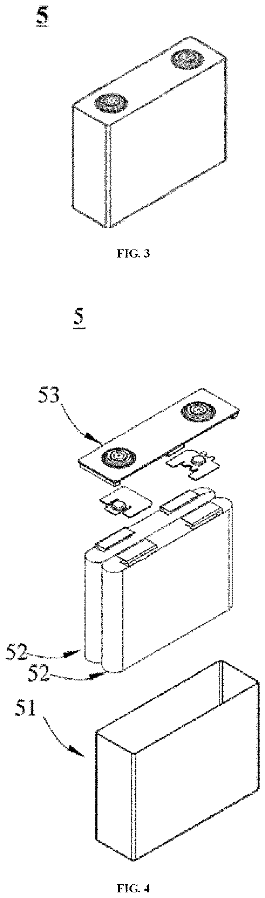

The shape of the battery cell is not particularly limited in the present application, and may be a cylinder shape, a square shape, or any other shape. For example, FIG. 3 shows a battery cell 5 with a square structure as an example.

In some embodiments, referring to FIG. 4, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assembly 52 comprised in the battery cell 5 may be one or more, and may be selected by those skilled in the art based on actual requirements.

### Battery

In a fourth aspect, the present application provides a battery, comprising the battery cell according to any one embodiment in the third aspect.

According to the present application, the battery cell may be assembled into a battery. An embodiment of the present application further provides a battery, comprising: a box body and the above battery cell; wherein the battery cell is accommodated in the box body.

The number of battery cells comprised in the above battery may be one or more, and the specific number may be selected by those skilled in the art based on the application and capacity of the battery.

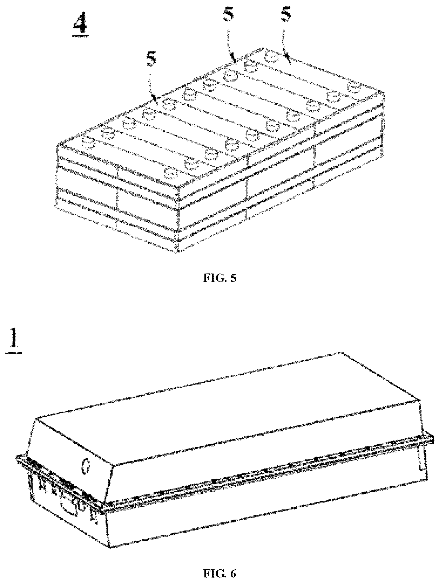

Further, in the above battery, a plurality of battery cells exist in the form of a battery module assembled therefrom. FIG. 5 shows a battery module 4 as an example. Referring to FIG. 5, in the battery module 4, a plurality of battery cells 5 may be arranged sequentially along a length direction of the battery module 4, or, of course, may be arranged in any other manner. The plurality of battery cells 5 may further be fixed by fasteners.

Optionally, the battery module 4 may further comprise a shell having an accommodating space, in which the plurality of battery cells 5 are accommodated.

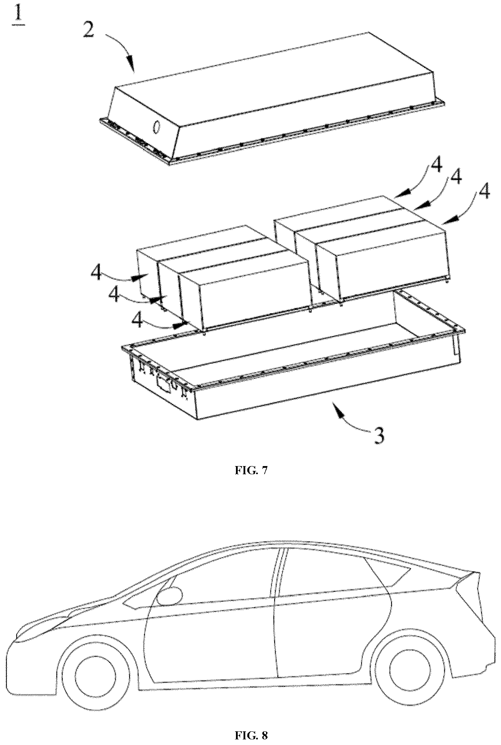

FIGS. 6 and 7 show a battery 1 as an example. Referring to FIGS. 6 and 7, the battery 1 may comprise a battery box and a plurality of battery modules 4 arranged in the battery box. The battery box comprises an upper box 2 and a lower box 3, wherein the upper box 2 can cover the lower box 3 and forms an enclosed space for accommodating the battery module 4. The plurality of battery modules 4 may be arranged in the battery box in any manner.

The above battery may be a secondary battery or a lithium battery.

### Electrical apparatus

In a fifth aspect, the present application provides an electrical apparatus, comprising at least one of the battery cell according to any one embodiment in the third aspect or the battery according to any one embodiment in the fourth aspect.

The present application further provides an electrical apparatus, comprising the battery cell or the battery provided in the present application. The battery cell or the battery may be used as a power source of the electrical apparatus, or may be used as an energy storage unit of the electrical apparatus. The electrical apparatus may include, but is not limited to, a mobile device (such as a mobile phone or a laptop), an electric vehicle (such as an all-electric vehicle, a hybrid electric vehicle, a plug-in hybrid electric vehicle, an electric bicycle, an electric scooter, an electric golf cart, or an electric truck), an electric train, a ship, a satellite, or an energy storage system.

For the electrical apparatus, the battery cell or the battery mentioned above may be selected based on use requirements thereof.

FIG. 8 shows an electrical apparatus as an example. The electrical apparatus is, e.g., an all-electric vehicle, a hybrid electric vehicle, or a plug-in hybrid electric vehicle.

As another example, the apparatus may be, e.g., a mobile phone, a tablet, or a laptop. The apparatus is generally required to be thin and light, and may use a battery cell as a power source.

### Examples

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where no manufacturers are specified, the employed reagents or instruments are all commercially available conventional products.

Preparation of porous phenolic resin microspheres: a phenolic compound, an aldehyde compound, a catalyst, a pore-forming agent, and water at a certain ratio were added into a three-necked flask equipped with a mechanical stirrer and a reflux condensing tube; the system was stirred, heated to 90°C, dispersed while stirring for 4 h, and adjusted to a pH of 2-3; heating was continued for reaction for 1 h, and then stopped; the system was cooled while stirring to room temperature; and
the reactant was filtered, washed with water until neutral, and dried, thus providing the porous phenolic resin microspheres.

According to the existing method, types and addition amounts of the phenolic compound, the aldehyde compound, the catalyst, the pore-forming agent, or the reaction conditions in the above reaction system were controlled, to provide porous phenolic resin microspheres with different particle sizes, average pore sizes, specific surface areas, and total pore volumes.

### Example 1-1

### (1) Preparation of a composite separator

A commercially available microporous PE polymer film with a thickness of 7 µm and an average pore size of 80 nm (from Zoco Electronic Technology Co., Ltd.) was used as the substrate. Polyacrylic acid binder and porous phenolic resin microspheres at a mass ratio of 1:10, totaling 150 g, were added to 850 g of deionized water. The mixture was fully mixed by stirring to obtain a slurry. The slurry was coated on the substrate and dried in a drying oven. The coating density of the binder and the porous phenolic resin microspheres on the substrate was 2 g/m². Then, the substrate was rolled up to finally provide the composite separator.

The preparation parameters associated with the porous phenolic resin microspheres and their Dv50 particle size, average pore size, specific surface area, and total pore volume are shown in Table 1.

### (2) Preparation of a positive electrode plate

Polyvinylidene fluoride (PVDF), lithium iron phosphate (LFP), conductive agent carbon black, and N-methylpyrrolidone (NMP) at a mass ratio of 1.2:58.38:0.42:40 were fully mixed by stirring to prepare a positive electrode slurry. The positive electrode slurry was uniformly coated onto a positive electrode current collector aluminum foil at a loading amount of 200 g/m², followed by drying, cold pressing, and cutting, to provide the positive electrode plate.

### (3) Preparation of a negative electrode plate

Artificial graphite, a conductive agent acetylene black, a binder styrene butadiene rubber (SBR), and a thickener sodium carboxymethyl cellulose (CMC-Na) at a mass ratio of 96.2:1.0:1.6:1.2 were added to deionized water. The mixture was fully mixed by stirring to obtain a negative electrode slurry (solid content: 63%). The negative electrode slurry was coated onto a negative electrode current collector copper foil at a loading amount of 98 g/m², followed by drying, cold pressing, and cutting, to provide the negative electrode plate.

### (4) Preparation of an electrolyte solution

At 25°C, ethylene carbonate (EC), ethyl methyl carbonate (EMC), and diethyl carbonate (DEC) at a volume ratio of 1:1:1 were mixed to obtain a mixed solvent, and then LiPF₆ was dissolved in the above mixed solvent to obtain an electrolyte solution with the concentration of LiPF₆ being 1 mol/L.

### (5) Preparation of a secondary battery

The positive electrode plate, the composite separator, and the negative electrode plate mentioned above were sequentially stacked, winded, and cold-formed (during which the separator is bonded to the electrode plates), to obtain a battery cell. The battery cell was placed in an outer package, into which the electrolyte solution prepared above was added, followed by the processes, such as encapsulation, standing, formation, and aging, to provide the secondary battery.

Examples 1-2 to 1-36 are substantially same as Example 1-1, except for some parameters detailed in Table 1.

### Comparative Example 1-1

This comparative example is substantially same as Example 1-1, except that a commercially available microporous PE polymer film with a thickness of 7 µm and an average pore size of 80 nm is directly used as the separator of the secondary battery.

### Comparative Example 1-2

This comparative example is substantially same as Example 1-1, except for the composite separator, wherein aluminum oxide with Dv50 of 1 µm is used in place of the porous phenolic resin microspheres to prepare the composite separator as the separator of the secondary battery.

Examples 2-1 to 2-10, and Comparative Examples 2-1 and 2-2 are substantially same as Example 1-7, except for some parameters detailed in Table 2.

### Testing

### 1. Test of thermal shrinkage rate of the separator

Sample preparation: The separator prepared above was punched using a punching machine into samples with a width of 50 mm and a length of 100 mm, 5 parallel samples were placed on A4 paper, and then the A4 paper carrying the samples was placed on corrugated paper with a thickness of 1 mm to 5 mm.

Sample test: A blast drying oven was set to a temperature of 150°C. After the blast drying oven reached the set temperature and kept at the temperature for 30 min, the A4 paper placed on the corrugated paper was transferred to the blast drying oven, and timing was started. After the set time (1 h in the present application) elapsed, the length and width of the separator were measured, and were denoted as a and b, respectively.

Calculation of the thermal shrinkage rate: thermal shrinkage rate in the machine direction (MD)=[(100-a)/100]×100%, thermal shrinkage rate in the transverse direction (TD)=[(50-b)/50]×100%. The average value of 5 parallel samples were used as the test result.

### 2. Gas permeability value measurement

The separator was cut into squares of 5 cm, and a gas permeability tester was used to test the time required for 100 ml of gas to pass through the separator of 6.45 cm² under a pressure of 1.21 kPa, to obtain the gas permeability value thereof (s/100 mL).

### 3. Test of capacity retention rate of the secondary battery

At 25 °C, the secondary battery was charged to 4.2 V at a constant current of 1/3 C, then charged to a current of 0.05 C at a constant voltage of 4.2 V, laid aside for 5 min, and then discharged to 2.8 V at 1/3 C, to obtain the capacity denoted as initial capacity C0. The above steps were repeated, discharge capacity C1000 of the secondary battery was recorded after the 1000-th cycle, and capacity retention rate of the secondary battery after 1000 cycles was P1000=C1000/C0^{×} 100%.

The test results are as shown in Tables 1 and 2

**Table 1**

| | Preparation parameters of porous phenolic resin microsphere | | | Porous phenolic resin microsphere | | | | Surface density of the coating layer (g/rn²) | Dv50/ d | Separator | | | Capacity retention rate of the secondary battery (%) |
|---|---|---|---|---|---|---|---|---|---|---|---|---|---|
| | Phenolic compou nd | Aldehyde compound | Molar ratio of phenolic hydroxyl to aldehyde radical | Dv50 (µm) | Average pore size (mm) | Specific surface area (m²g) | Total pore volume (m³g) | | | MD thermal shrinkage rate (%) | TD thermal shrinkage rate (%) | Gas permeabilit y value (s/100mL) | |
| Example 1-1 | Phenol | Formaldeh yde | 1:1.3 | 0.06 | 20 | 341 | 1.87 | 2 | 0.75 | 3.68 | 3.3 | 428 | 88.5 |
| Example 1-2 | Phenol | Formaldeh yde | 1:1.3 | 0.08 | 20 | 301 | 1.79 | 2 | 1 | 3.52 | 2.97 | 410 | 89.6 |
| Example 1-3 | Phenol | Formaldeh yde | 1:1.3 | 0.1 | 20 | 280 | 1.68 | 2 | 1.25 | 2.77 | 2.37 | 361 | 91.3 |
| Example 1-4 | Phenol | Formaldeh yde | 1:1.3 | 0.12 | 20 | 265 | 1.56 | 2 | 1.5 | 1.93 | 1.67 | 318 | 92.3 |
| Examp le 1-5 | Phenol | Formaldeh yde | 1:1.3 | 0.5 | 20 | 192 | 1.41 | 2 | 6.25 | 1.03 | 0.86 | 265 | 93.9 |
| Examp le 1-6 | Phenol | Formaldeh yde | 1:1.3 | 0.8 | 20 | 151 | 1.25 | 2 | 10 | 0.76 | 0.67 | 243 | 95.2 |
| Example 1-7 | Phenol | Formaldeh yde | 1:1.3 | 1 | 20 | 119 | 1.13 | 2 | 12.5 | 0.46 | 0.34 | 220 | 95.6 |
| Example 1-8 | Phenol | Formaldeh yde | 1:1.3 | 2 | 20 | 60 | 0.91 | 2 | 25 | 0.82 | 0.68 | 247 | 94.6 |
| Example 1-9 | Phenol | Formaldeh vde | 1:1.3 | 3 | 20 | 49 | 0.82 | 2 | 37.5 | 1.64 | 1.42 | 283 | 93.2 |
| Example 1-10 | Phenol | Formaldeh yde | 1:1.3 | 4 | 20 | 31 | 0.76 | 2 | 50 | 1.98 | 1.72 | 331 | 92 |
| Example 1-11 | Phenol | Formaldeh yde | 1:1.3 | 5 | 20 | 15 | 0.7 | 2 | 62.5 | 2.82 | 2.39 | 382 | 90.3 |
| Example 1-12 | Phenol | Formaldehyde | 1:1.3 | 6 | 20 | 7 | 0.63 | 2 | 75 | 3.31 | 3.14 | 401 | 90 |
| Example 1-13 | Phenol | Formaldeh yde | 1:1.3 | 1 | 5 | 269 | 1.71 | 2 | 12.5 | 3.06 | 2.74 | 376 | 90.7 |
| Example 1-14 | Phenol | Formaldeh yde | 1:1.3 | 1 | 10 | 236 | 1.59 | 2 | 12.5 | 1.58 | 1.33 | 285 | 93 |
| Example 1-15 | Phenol | Formaldeh yde | 1:1.3 | 1 | 15 | 172 | 1.28 | 2 | 12.5 | 0.63 | 0.54 | 263 | 94.1 |
| Example 1-16 | Phenol | Formaldeh yde | 1:13 | 1 | 25 | 102 | 1.02 | 2 | 12.5 | 0.79 | 0.66 | 272 | 93.6 |
| Example 1-17 | Phenol | Formaldeh yde | 1:1.3 | 1 | 30 | 85 | 0.93 | 2 | 12.5 | 1.52 | 1.33 | 290 | 92.8 |
| Example 1-18 | Phenol | Formaldeh yde | 1:1.3 | 1 | 40 | 76 | 0.85 | 2 | 12.5 | 2.29 | 1.96 | 311 | 926 |
| Example 1-19 | Phenol | Formaldeh yde | 1:1.3 | 1 | 50 | 42 | 0.72 | 2 | 12.5 | 2.86 | 2.39 | 362 | 91 |
| Example 1-20 | Phenol | Formaldeh yde | 1:1.3 | 1 | 60 | 12 | 0.55 | 2 | 12.5 | 3.15 | 2.73 | 413 | 89.1 |
| Example 1-21 | Phenol | Formaldeh yde | 1:1.3 | 1 | 20 | 119 | 1.13 | 0.08 | 12.5 | 4.83 | 4.18 | 430 | 88.4 |
| Example 1-22 | Phenol | Formaldehyde | 1:1.3 | 1 | 20 | 119 | 1.13 | 0.1 | 12.5 | 3.67 | 3.11 | 328 | 92.1 |
| Example 1-23 | Phenol | Formaldehyde | 1:1.3 | 1 | 20 | 119 | 1.13 | 1 | 12.5 | 1.14 | 1.08 | 249 | 94.3 |
| Example 1-24 | Phenol | Formaldehyde | 1:1.3 | 1 | 20 | 119 | 1.13 | 3 | 12.5 | 0.31 | 0.26 | 267 | 93.9 |
| Example 1-25 | Phenol | Formaldehyde | 1:1.3 | 1 | 20 | 119 | 1.13 | 4 | 12.5 | 0.28 | 0.24 | 357 | 91.7 |
| Example 1-26 | Phenol | Formaldehyde | 1:1.3 | 1 | 20 | 119 | 1.13 | 5 | 12.5 | 0.12 | 0.1 | 457 | 87.2 |
| Example 1-27 | Phenol | Formaldehyde | 1:1.3 | 1 | 20 | 119 | 1.13 | 6 | 125 | 0.1 | 0.08 | 491 | 85.1 |
| Example 1-28 | Phenol | Formaldehyde | 1:1 | 1 | 20 | 119 | 1.13 | 2 | 12.5 | 3.27 | 2.84 | 410 | 89.3 |
| Example 1-29 | Phenol | Formaldehyde | 1:1.1 | 1 | 20 | 119 | 1.13 | 2 | 12.5 | 1.52 | 1.32 | 341 | 91.9 |
| Example 1-30 | Phenol | Formaldehyde | 1:1.4 | 1 | 20 | 119 | 1.13 | 2 | 12.5 | 0.97 | 0.92 | 279 | 93.5 |
| Example 1-31 | Phenol | Formaldehyde | 1:1.6 | 1 | 20 | 119 | 1.13 | 2 | 12.5 | 2.62 | 2.35 | 310 | 92.6 |
| Example 1-32 | Phenol | Formaldehyde | 1:1.7 | 1 | 20 | 119 | 1.13 | 2 | 12.5 | 3.81 | 3.21 | 383 | 90.2 |
| Example 1-33 | Phenol | Paraformaldehyde | 1:1.3 | 1 | 20 | 118 | 1.07 | 2 | 12.5 | 0.58 | 0.5 | 237 | 95.3 |
| Example 1-34 | Cresol | Paraformaldehyde | 1:1.3 | 1 | 20 | 122 | 1.18 | 2 | 12.5 | 0.49 | 0.42 | 242 | 95.2 |
| Example 1-35 | Catechol | Formaldehyde | 1:1.3 | 1 | 20 | 106 | 1.02 | 2 | 12.5 | 0.52 | 0.49 | 253 | 94.2 |
| Example 1-36 | Hydroquinone | Formaldehyde | 1:1.3 | 1 | 20 | 105 | 1.01 | 2 | 12.5 | 0.55 | 0.49 | 246 | 94.6 |
| Comparative Example 1-1 | \ | \ | \ | \ | \ | \ | \ | 2 | \ | 6.72 | 5.69 | 210 | 82.7 |
| Comparative Example 1-2 | \ | \ | \ | \ | \ | \ | \ | 2 | 12.5 | 4.96 | 4.24 | 492 | 84.6 |

| | | | | | | | | | | | | | |
|---|---|---|---|---|---|---|---|---|---|---|---|---|---|
| Note: "\" in Table 1 means that the parameter is absent. | | | | | | | | | | | | | |

**Table 2**

| | Binder | Mass ratio of binder to porous phenolic resin microsphere | Separator | | | Capacity retention rate of the secondary battery (%) |
|---|---|---|---|---|---|---|
| | | | MD thermal shrinkage rate (%) | TD thermal shrinkage rate (%) | Gas permeability value (s/100mL) | |
| Example 1-7 | Polyacrylic acid | 1:10 | 0.46 | 0.34 | 220 | 95.6 |
| Example 2-1 | Polyacrylate | 1:10 | 0.45 | 0.35 | 231 | 95.1 |
| Example 2-2 | Polyvinylidene fluoride | 1:10 | 0.48 | 0.36 | 226 | 95.4 |
| Example 2-3 | Polyacrylate | 1:1 | 2.96 | 2.19 | 433 | 86.7 |
| Example 2-4 | Polyacrylate | 1:4 | 1.66 | 1.39 | 375 | 88.3 |
| Example 2-5 | Polyacrylate | 1:8 | 0.94 | 0.82 | 254 | 94.3 |
| Example 2-6 | Polyacrylate | 1:12 | 0.93 | 0.78 | 263 | 93.5 |
| Example 2-7 | Polyacrylate | 1:15 | 1.57 | 1.36 | 282 | 92.6 |
| Example 2-8 | Polyacrylate | 1:18 | 2.65 | 2.3 | 297 | 91.2 |
| Example 2-9 | Polyacrylate | 1:20 | 3.87 | 3.28 | 336 | 90.6 |
| Comparative Example 2-1 | Polyacrylate | 1:0.8 | 3.67 | 3.48 | 473 | 85.2 |
| Comparative Example 2-2 | Polyacrylate | 1:22 | 4.21 | 3.11 | 365 | 89.2 |

As can be seen from the comparison between the examples and the comparative examples shown in Table 1, the composite separator obtained in each example has a smaller thermal shrinkage rate, and the secondary battery has a significantly improved capacity retention rate. In Comparative Example 1-1, a polyethylene base film is directly used as the separator of the secondary battery, which has poor heat resistance, thus having a high thermal shrinkage rate, and the secondary battery has poor safety; in addition, the coating is not prepared on the surface and it has good gas permeability, but heat is inevitably generated during the cycles of the secondary battery, so that the separator fails to maintain a stable structure, and has a low capacity retention rate. In Comparative Example 1-2, aluminum oxide with Dv50 particle size of 1 µm is used in place of the porous phenolic resin microspheres to prepare the composite separator, of which the thermal shrinkage rate is slightly reduced compared with that in Comparative Example 1-1, but the reduction effect is not obvious. The possible reason is that aluminum oxide has poor film-forming property, and has good heat resistance itself, but does not significantly improve the heat resistance of the separator. In addition, since it does not have a porous structure, its gas permeability is significantly reduced compared with the examples and Comparative Example 1-1, thereby reducing the ion transport channel, increasing polarization, and resulting in a low capacity retention rate of the secondary battery.

As can be seen from the comparison between Examples 1-1 to 1-20, the parameters of the porous phenolic resin microspheres have certain influence on the heat resistance and the gas permeability of the composite separator, thereby affecting the safety and the capacity retention rate of the secondary battery. When the porous phenolic resin microspheres safety any one of: Dv50 particle size being 0.1 µm to 5 µm, average pore size being 10 nm to 50 nm, specific surface area being 15 m²/g to 280 m²/g, and total pore volume being 0.700 cm3/g to 1.680 cm3/g, the resulting composite separator has good heat resistance and good gas permeability, and the secondary battery has good safety and a high capacity retention rate. Preferably, when the porous phenolic resin microspheres safety any one of: the Dv50 particle size being 0.12 µm to 2 µm, the average pore size being 15 nm to 40 nm, the specific surface area being 60 m²/g to m²/g, and the total pore volume being 0.910 cm³/g to 1.560 cm³/g, the resulting composite separator has better heat resistance and better gas permeability, and the secondary battery has better safety and a higher capacity retention rate.

As can be seen from the comparison between Examples 1-21 to 1-28 and Example 1-7, the surface density of the coating layer has certain influence on the heat resistance and the gas permeability of the composite separator, thereby affecting the safety and the capacity retention rate of the secondary battery. When the surface density of the coating layer is 0.1 g/cm² to 5 g/cm², the resulting composite separator has good heat resistance and good gas permeability, and the secondary battery has good safety and a high capacity retention rate. Preferably, when the surface density of the coating layer is 1 g/cm² to 4 g/cm², the resulting composite separator has better heat resistance and better gas permeability, and the secondary battery has better safety and a higher capacity retention rate.

As can be seen from the comparison between Examples 1-29 to 1-32 and Example 1-7, the molar ratio of the phenolic hydroxyl to the aldehyde radical in the porous phenolic resin microspheres has certain influence on the heat resistance and the gas permeability of the composite separator, thereby affecting the safety and the capacity retention rate of the secondary battery. When the molar ratio of the phenolic hydroxyl to the aldehyde radical is 1:1.1 to 1:1.6, the resulting composite separator has good heat resistance and good gas permeability, and the secondary battery has good safety and a high capacity retention rate. Preferably, when the molar ratio of the phenolic hydroxyl to the aldehyde radical is 1:1.1 to 1:1.4, the resulting composite separator has better heat resistance and better gas permeability, and the secondary battery has better safety and a higher capacity retention rate.

As can be seen from the comparison between Examples 1-33 to 1-36 and Example 1-7, the phenolic compound and the aldehyde compound in the raw materials of the porous phenolic resin microspheres have certain small influence on the heat resistance and the gas permeability of the composite separator, all of which have good heat resistance and a good gas permeability value, and the secondary battery has good safety and a good capacity retention rate.

The possible reasons for the above results are described in the above Summary of the Invention, and will not be repeated here.

According to Table 2, as can be seen from the comparison between the examples and the comparative examples, the composite separator obtained in each example has a smaller thermal shrinkage rate and a smaller gas permeability value, and the secondary battery has a better capacity retention rate. In Comparative Example 2-1, due to the too high content of the binder, the coating layer has a small porosity, and the binder has poor heat resistance, resulting in a large thermal shrinkage rate and a large gas permeability value, the composite separator has poor heat resistance and gas permeability, and the secondary battery has a low capacity retention rate. In Comparative Example 2-2, too low content of the binder may cause the porous phenolic resin microspheres to fail to stably bond to the surface of the base film, thus failing to effectively reduce the thermal shrinkage rate of the base film. Moreover, too many microspheres will also affect the gas permeability of the composite separator. In addition, the composite separator has poor stability, thereby resulting in a low capacity retention rate of the secondary battery.

As can be seen from the comparison between Examples 2-1, 2-2, and 1-7, types of ordinary binders have certain small influence on the heat resistance and the gas permeability of the composite separator, all of which have good heat resistance and a good gas permeability value, so that the secondary battery has good safety and a good capacity retention rate.

As can be seen from the comparison between Examples 2-1 and 2-3 to 2-9, the mass ratio of the binder to the porous phenolic resin microspheres has certain influence on the heat resistance and the gas permeability of the composite separator, thereby affecting the safety and the capacity retention rate of the secondary battery. When the mass ratio of the binder to the porous phenolic resin microspheres is 1:1 to 1:20, the resulting composite separator has good heat resistance and good gas permeability, and the secondary battery has good safety and a high capacity retention rate. Preferably, when the mass ratio of the binder to the porous phenolic resin microspheres is 1:8 to 1:15, the resulting composite separator has better heat resistance and better gas permeability, and the secondary battery has better safety and a higher capacity retention rate.

The possible reasons for the above results are described in the above Summary of the Invention, and will not be repeated here.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A coating composition for a separator, comprising: porous phenolic resin microspheres and a binder,
wherein a mass ratio of the binder to the porous phenolic resin microspheres is 1:1 to 1:20.

2. The coating composition according to claim 1, wherein the binder comprises at least one of polyacrylic acid, polyacrylate, polyvinylidene fluoride, styrene butadiene rubber, or sodium carboxymethylcellulose.

3. The coating composition according to claim 1 or 2, wherein the porous phenolic resin microspheres satisfy at least one of conditions below:
1) Dv50 particle size of the porous phenolic resin microspheres is 0.1 µm to 5 µm;
2) average pore size of the porous phenolic resin microspheres is 10 nm to 50 nm;
3) specific surface area of the porous phenolic resin microspheres is 15 m²/g to 280 m²/g; and
4) total pore volume of the porous phenolic resin microspheres is 0.700 cm³/g to 1.680 cm³/g.

4. The coating composition according to any one of claims 1 to 3, wherein the porous phenolic resin microspheres satisfy at least one of conditions below:
1) the Dv50 particle size of the porous phenolic resin microspheres is 0.12 µm to 2 µm;
2) the average pore size of the porous phenolic resin microspheres is 15 nm to 40 nm;
3) the specific surface area of the porous phenolic resin microspheres is 60 m²/g to 265 m²/g; and
4) the total pore volume of the porous phenolic resin microspheres is 0.910 cm³/g to 1.560 cm³/g.

5. The coating composition according to any one of claims 1 to 4, wherein the porous phenolic resin microspheres are obtained through a reaction between a phenolic compound and an aldehyde compound in a solvent in the presence of a catalytic amount of a phenolic aldehyde polycondensation reaction catalyst and a pore-forming amount of a pore-forming agent.

6. The coating composition according to claim 5, wherein a molar ratio of phenolic hydroxyl in the phenolic compound to aldehyde radical in the aldehyde compound is 1:1.1 to 1:1.6.

7. The coating composition according to claim 5 or 6, wherein the phenolic compound comprises at least one of phenol, hydroquinone, resorcinol, catechol, cresol, or anacardol;
the aldehyde compound comprises formaldehyde and/or paraformaldehyde;
the phenolic aldehyde polycondensation reaction catalyst is an alkaline substance, comprising at least one of sodium hydroxide, ammonia water, triethylamine, barium hydroxide, or aniline; and
the pore-forming agent comprises at least one of toluene, ethylene glycol, diethyl phthalate, dioctyl phthalate, or octadecanol.

8. A composite separator, comprising: a base film, and
a coating layer arranged on at least one surface of the base film and formed by the coating composition according to any one of claims 1 to 7.

9. The composite separator according to claim 8, wherein surface density of the coating layer is 0.1 g/m² to 5 g/m².

10. The composite separator according to claim 8 or 9, wherein the composite separator satisfies: 1.25≤D/d≤62.5,
wherein D is Dv50 particle size of the porous phenolic resin microspheres, and
d is average pore size of the base film.

11. The composite separator according to any one of claims 8 to 10, wherein the composite separator satisfies: 1.5≤D/d≤25.

12. A battery cell, comprising the composite separator according to any one of claims 8 to 11.

13. A battery, comprising the battery cell according to claim 12.

14. An electrical apparatus, comprising at least one of the battery cell according to claim 12 or the battery according to claim 13.
